# FASCICULE DE BREVET EUROPEEN

(11) **EP 1 849 664 B1**
(45) Date de publication et mention de la délivrance du brevet: **01.09.2010**
(21) Numéro de dépôt: 07300969.8
(22) Date de dépôt: 20.04.2007
(51) Int. Cl.: B60R 21/34

(54) **Dispositif de sécurité passif en cas de choc piéton avant d'un véhicule automobile et véhicule comprenant un tel dispositif**
Passive Sicherheitsvorrichtung für den Fall eines Zusammenstoßes eines Fußgängers mit einem Kraftfahrzeug und Fahrzeug, das eine solche Vorrichtung umfasst
Passive safety device for frontal collision with a pedestrian and vehicle comprising such a device

(30) Priorité: 26.04.2006 FR 0651482
(43) Date de publication de la demande: 31.10.2007
(73) Titulaire: PEUGEOT CITROËN AUTOMOBILES S.A., 78140 Vélizy Villacoublay (FR)
(72) Inventeur: Gourvenec, Thibault, 91170 Viry-Chatillon (FR); Benane, Saïd, 94550 Chevilly la Rue (FR)

(56) Documents cités:
- EP-A2- 1 510 421
- DE-A1- 10 308 371
- FR-A1- 2 836 879
- JP-A- 8 276 877
- JP-A- 8 303 073
- JP-A- 2000 001 182
- JP-A- 2002 087 327
- JP-A- 2003 212 154

## Description

L'invention concerne un dispositif de sécurité passif en cas de choc piéton avant d'un véhicule automobile.

L'invention concerne également un véhicule automobile comportant un tel dispositif.

Plus précisément, l'invention concerne un dispositif de sécurité en cas de choc piéton dirigé vers le système de verrouillage en position fermée du capot d'un véhicule automobile, lequel véhicule comprend une structure fixe à laquelle le capot est monté articulé, lequel capot comprend une peau de capot sous laquelle est disposé le système de verrouillage pourvue d'un pêne solidaire de la structure fixe du véhicule et d'une gâche rigidement liée au capot et sélectivement engagée dans le pêne.

Les éléments qui constituent le système de verrouillage en position fermée du capot d'un véhicule automobile sont généralement des pièces qui sont conçues suffisamment rigides pour assurer la tenue de ce système à la fermeture brusque du capot, à l'ouverture et à la fermeture répétées du capot ainsi qu'au maintien fixe verrouillé de ce capot dans toutes les conditions de vie du véhicule.

Cette rigidité des pièces du système de verrouillage augmente la dangerosité lors d'un impact entre un piéton, et notamment sa tête, et le capot du véhicule au niveau de ce système de verrouillage.

En effet, sous l'effet des efforts liés à l'impact, le capot va s'enfoncer jusqu'au système de verrouillage pouvant entraîner ainsi un contact violent entre la tête du piéton et les pièces rigides du système de verrouillage.

Pour éviter un tel contact, la publication FR 2 836 879 décrit un dispositif dans lequel la gâche est prolongée vers la peau de capot par une pièce déformable comprenant deux lames dont chaque extrémité libre opposée aux extrémités respectives de la gâche est rigidement liée à la peau de capot.

Un dispositif similaire est décrit dans le document EP 1829756.

Cependant, dans un tel système, la liaison entre la gâche et la pièce formant absorbeur de choc nécessite la mise en oeuvre de pièces particulières du système de verrouillage ainsi que des opérations spécifiques lors du montage de ce système de verrouillage sur le véhicule automobile.

Dans ce contexte, l'invention vise un dispositif assurant l'absence d'impact entre un piéton et le système de verrouillage du capot du véhicule en cas de choc avant tout en étant facilement adaptable à un système de verrouillage existant.

A cet effet, le dispositif de l'invention est essentiellement caractérisé en ce qu'il comprend un absorbeur de choc rigidement lié au capot en étant disposé entre la peau de capot et le système de verrouillage, et dont une partie continue déformable fait face au système de verrouillage en étant disposé à une certain distance de ce dernier de façon à amortir les efforts liés au choc et à éviter tout contact entre la peau de capot, susceptible d'être déformée sous l'impact du choc, et le système de verrouillage.

Selon un aspect avantageux de l'invention, l'absorbeur présente la forme générale d'une lame approximativement en U inversé dont les extrémités libres sont rigidement liées à une doublure de capot solidaire de la peau de capot sous laquelle est disposé le système de verrouillage, et l'âme de la lame disposée entre la peau de capot et la doublure de capot en regard du système de verrouillage est essentiellement plate.

De préférence, la gâche présente la forme générale d'un fil rigide en U essentiellement disposé sous la doublure de capot et dont les deux extrémités libres s'étendent dans des directions opposées par-dessus cette doublure.

Avantageusement, un renfort de gâche est rigidement fixé sur la doublure de capot et comprend deux nervures creuses dans lesquelles sont rigidement fixées chacune des extrémités recourbées du fil de gâche.

Dans un mode préféré de l'invention, l'absorbeur de choc est rigidement lié au renfort de gâche.

De préférence, l'absorbeur de choc est une lame pliée ou emboutie en acier ou en aluminium.

Par ailleurs, il peut être avantageux que la partie continue déformable de l'absorbeur de choc faisant face au système de verrouillage soit à une distance permettant la dépose d'un cordon de mastic de calage ou équivalent, par exemple à environ 2 mm de la peau de capot.

En outre, il est possible de prévoir que les extrémités libres de l'absorbeur soient soudées ou viennent en prise sur le renfort de gâche, que le renfort de gâche soit soudé ou vienne en prise sur la doublure du capot et que les extrémités du fil de gâche soient soudées au renfort de gâche dans les nervures respectives réalisées sur ce renfort.

Enfin, l'invention concerne également un véhicule automobile comprenant le dispositif de sécurité décrit précédemment.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de sécurité de l'invention et sur lesquels :
- la figure 1 est une représentation schématique en coupe longitudinale d'un système de verrouillage en position fermé du capot d'un véhicule selon l'art antérieur ;
- la figure 2 est une représentation schématique en coupe selon la ligne II-II notée sur la figure 1;
- la figure 3 est une représentation schématique en perspective prise de dessous du système de verrouillage de l'art antérieur de la figure 1 ;
- la figure 4 est une représentation schématique de face depuis l'avant du véhicule du système de verrouillage de la figure 1 lorsque la tête d'un piéton vient en contact avec la peau de capot ;
- la figure 5 est la même représentation schématique que celle de la figure 4 lorsque la tête du piéton impacte le système de verrouillage par enfoncement de la peau de capot;
- la figure 6 est une représentation schématique en perspective du dispositif de sécurité de l'invention ;
- la figure 7 est une représentation schématique en perspective du dispositif de sécurité de l'invention de la figure 6 assemblé sur la doublure de capot ;
- la figure 8 est la même représentation schématique que celle de la figure 1 incluant le dispositif de sécurité de l'invention ;
- la figure 9 est la même représentation schématique que celle de la figure 2 incluant le dispositif de sécurité de l'invention ;
- la figure 10 est la même représentation schématique que celle de la figure 4 incluant le dispositif sécurité de l'invention ; et
- la figure 11 est la même représentation schématique que celle de la figure 5 incluant le dispositif de sécurité de l'invention et mettant en évidence l'amortissement de la tête du piéton par ce dispositif de sécurité.

Dans la description ci-dessous, l'avant et l'arrière sont définis relativement au sens de déplacement normal du véhicule, la direction longitudinale XX' étant parallèle à ce sens de déplacement normal.

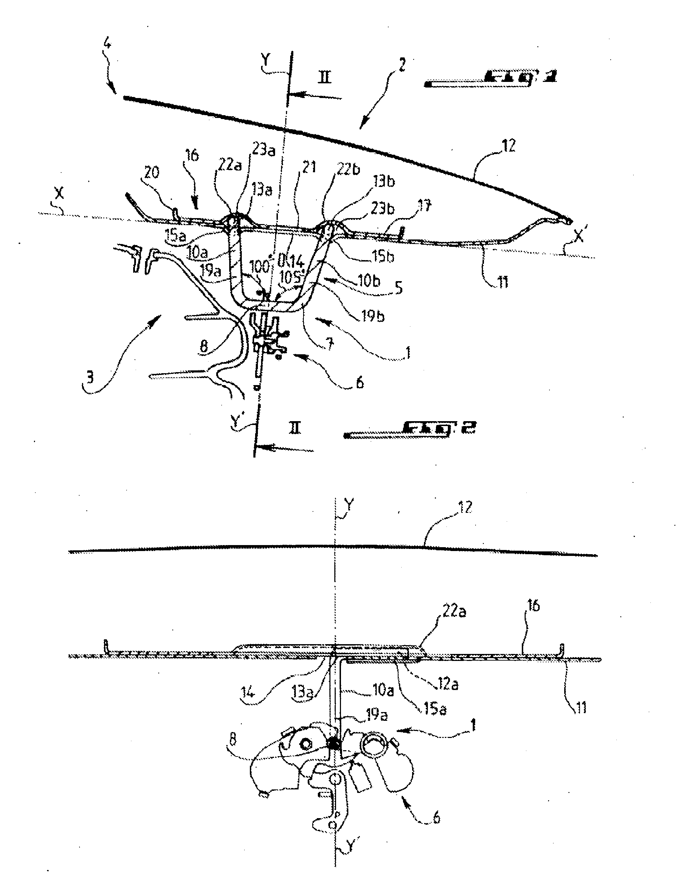

En référence aux figures 1 à 3, le système de verrouillage de l'art antérieur en position fermée 1 d'un capot 2 monté articulé par son bord arrière non représenté, à la structure fixe d'un véhicule automobile 4, schématisée sur la figure 1 par son Groupe Moto Ventilateur 3 (GMV), comprend essentiellement une gâche 5 et un penne 6 dans lequel la gâche 5 s'engage sélectivement pour assurer la fermeture du capot 2.

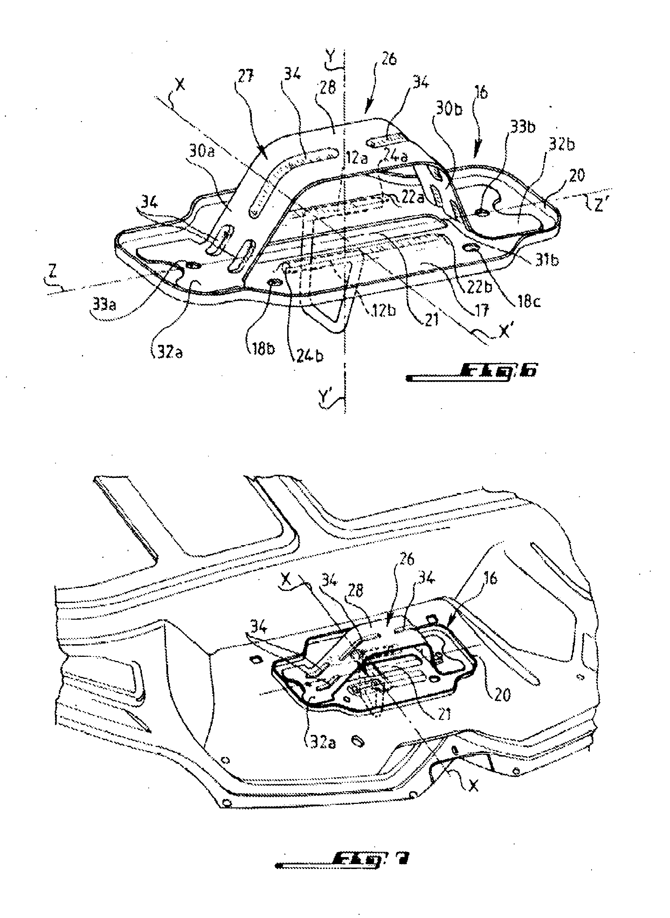

En référence aux figures 1 et 2 mais également à la figure 6 pour des raisons de visibilité, ce système comporte un renfort de gâche 16 présentant la forme générale d'une plaque 17 qui s'étend selon l'axe transversal ZZ' et qui vient en prise sur la doublure de capot 11 au moyen de rivets non représentés montés dans des orifices 18a,18b qui traversent le renfort 16 et la doublure 11.

Il est à noter que le renfort de gâche 16 peut être soudé à la doublure de capot 11 selon une variante non représentée.

Ce renfort de gâche 16 s'étend sur la doublure de capot 11 au dessus du dispositif de verrouillage 1 le long de l'axe vertical YY' en présentant des bords relevés sur toute sa circonférence 20.

En ce qui concerne la gâche 5, cette dernière est essentiellement constituée d'un fil rigide présentant une forme approximativement en U 7 dont l'âme essentiellement plane 8 est destinée à s'engager dans le penne 6 et dont les première 10a et deuxième 10b branches latérales comprennent chacune une partie principale respective 10a, 10b qui s'étend depuis l'âme 8 vers et jusqu'à la doublure de capot 11 qui est rigidement liée à la peau de capot 12, en formant un angle d'approximativement respectivement 100° et 105°.

Chaque branche latérale 10a,10b comporte une partie d'extrémité coudée respective 12a,12b liée à la partie principale correspondante 19a,19b par un coude 13a,13b, chaque extrémité coudée 12a,12b formant un angle d'approximativement 90° avec la partie principale associée 19a, 19b.

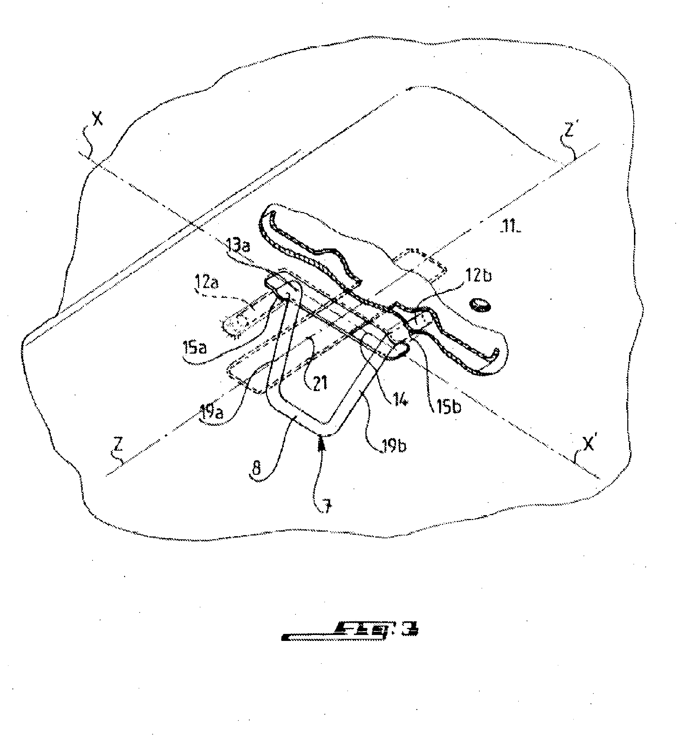

Au niveau de chaque coude 13a, 13b, le fil de gâche 7 traverse la doublure de capot 11 en passant à travers une lumière oblongue longitudinale 14 (figure 3) réalisée dans cette doublure 11.

Par ailleurs, les première 12a et deuxième 12b parties d'extrémités coudées des branches latérales 10a,10b de la gâche 5 s'étendent selon un axe transversal ZZ' dans des directions opposées sous le renfort de gâche 16 dans la partie creuse de nervures transversales respectives 22a,22b réalisées sur ce renfort, comme visible sur la figure 1, dans lesquelles ces parties d'extrémités 12a,12b sont soudées.

On peut prévoir selon une variante non représentée, que les première 12a et deuxième 12b extrémités coudées viennent en prise dans les nervures correspondantes 22a,22b selon des moyens appropriés connus de l'homme du métier.

Comme visible sur la figure 6, ces nervures creuses 22a,22b présentent une longueur approximativement du double de la longueur de la partie d'extrémité coudée qu'elle renferme 12a,12b en s'étendant depuis l'extrémité libre 24a,24b de cette partie d'extrémité coudée 12a,12b.

Par ailleurs, la doublure 11 présente deux rainures transversales 15a,15b de longueurs approximativement égales à celle de chaque extrémité coudée 12a,12b de la gâche 5, disposées chacune en regard d'une nervure creuse 22a, 22b du renfort de gâche 16 de façon à définir un logement 23a,23b pour chacune de ces extrémités coudées 12a,12b.

De cette façon, si les parties d'extrémités coudées 12a,12b, ou la gâche 5 en général, venaient à se détacher de l'une ou des deux nervures 22a, 22b du renfort de gâche 16, elles resteraient néanmoins prisonnières de leur logement respectif 23a,23b et le système de verrouillage 1 pourraient continuer à fonctionner.

Dn plus, le renfort de gâche 16 présente une lumière oblongue transversale 21 qui s'étend entre et parallèlement aux deux nervures creuses 22a,22b en étant sensiblement plus longue que chacune de ces deux nervures 22a,22b et qui sert au passage du crochet de sécurité non représenté présent sur la serrure de capot.

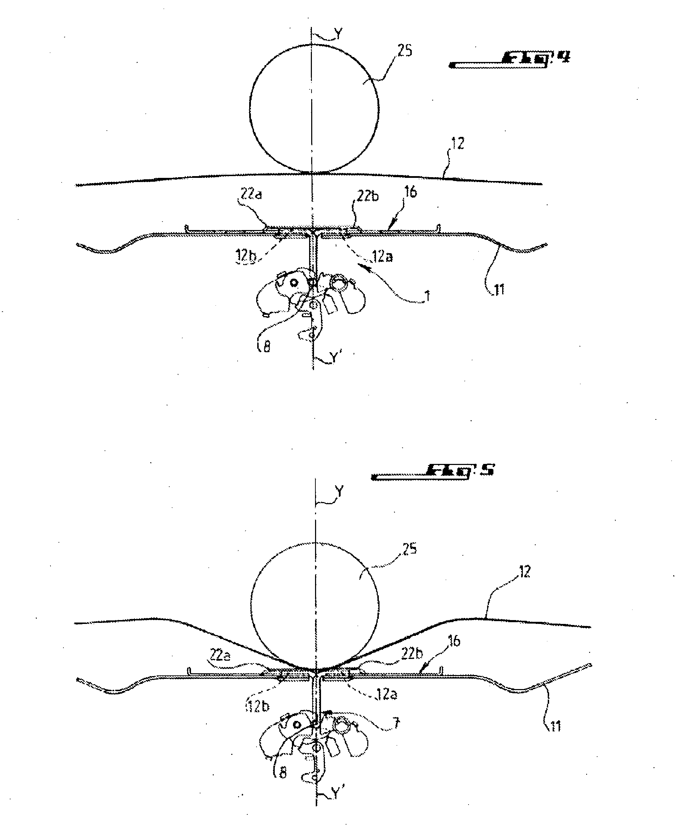

En référence aux figures 4 et 5, lors d'un choc piéton avant, la tête du piéton vient dans un premier temps en contact avec la peau de capot 12 puis, sous l'effet des efforts liés au choc, la peau de capot se déforme jusqu'au système de verrouillage 1 et plus particulièrement jusqu'au renfort de gâche 16 au niveau des deux nervures creuses 22a,22b sous lesquelles s'étendent les deux parties d'extrémités coudées 12a,12b du fil de gâche 7.

Or, la rigidité du renfort de gâche 16 ainsi que du fil de gâche 7 sont de nature à blesser violemment la tête du piéton 25 subissant le choc.

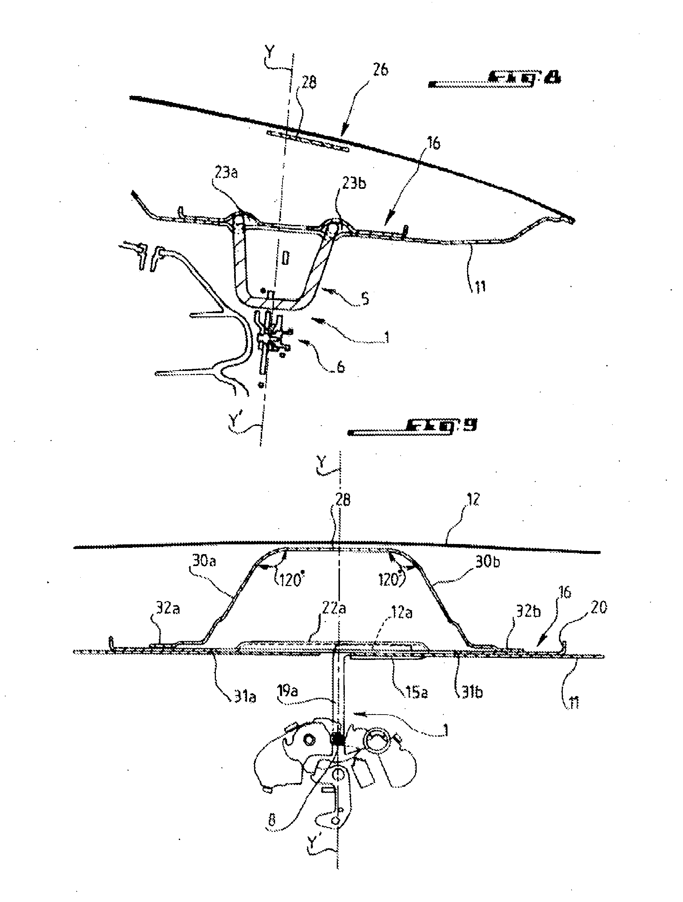

En référence aux figures 6 à 9, le dispositif de sécurité de l'invention 26 s'adapte sur le système de verrouillage de l'art antérieur décrit précédemment.

Ce dispositif de sécurité 26, qui s'étend transversalement au-dessus du système de verrouillage dabs l'alignement vertical de l'axe YY', comporte une lame de forme générale approximativement en U inversé 27 dont l'âme 28 est essentiellement plate et disposée en regard et à une certaine distance des deux nervures 22a,22b et de la lumière oblongue 21 du renfort de gâche 16.

Des première 30a et deuxième 30b branches latérales s'étendent obliquement depuis l'âme 28 de la lame 27 jusqu'au renfort de gâche 16 et plus précisément jusqu'au niveau des extrémités respectives 31a, 31b de la lumière oblongue 21 en formant un angle d'environ 120° avec l'âme 28.

Les première 30a et deuxième 30b branches latérales sont fixées au renfort de gâche 16 par des première 32a et deuxième 32b parties d'extrémités recourbées qui s'étendent transversalement dans des directions opposées vers l'extérieur du U en appui sur le renfort de gâche 16 en venant en prise sur ce renfort 16 au moyen de rivets non représentés montés dans des orifices prévus à cet effet 33a,33b qui traversent à la fois au moins le renfort 16, les première 32a et deuxième 32b parties d'extrémités recourbées concernées de la lame 28 et le renfort 16.

Les première 32a et deuxième 32b s'étendent dans des directions opposées pour une meilleure répartition des efforts mécaniques.

Il peut être également prévu dans une variante non représentée que les première 32a et deuxième 32b parties d'extrémités recourbées soient soudées au renfort de gâche 16.

La lame 27 peut être en aluminium ou en acier et elle peut être pliée ou emboutie.

Comme visible sur les figures 6 et 7, la lame 27 présente des renfoncements oblongs 34 constituant des nervures internes de raidissement de façon à éviter les déformations incontrôlées de cette lame 27.

Par ailleurs, cette lame 27 présente une certaine largeur mais également une certaine épaisseur qui seront déterminées par l'homme du métier pour répondre au mieux aux critères d'absorption.

Selon une variante non représentée, la lame 28 peut être solidairement fixée directement à la doublure de capot 11 par des moyens équivalents de fixation.

Par ailleurs, la position de l'âme 28 de la lame 27 sera ajustée de façon à se trouver à environ 2 mm sous la peau de capot 12 pour qu'un cordon de mastic puisse être inséré entre la lame 24 et la peau de capot 12.

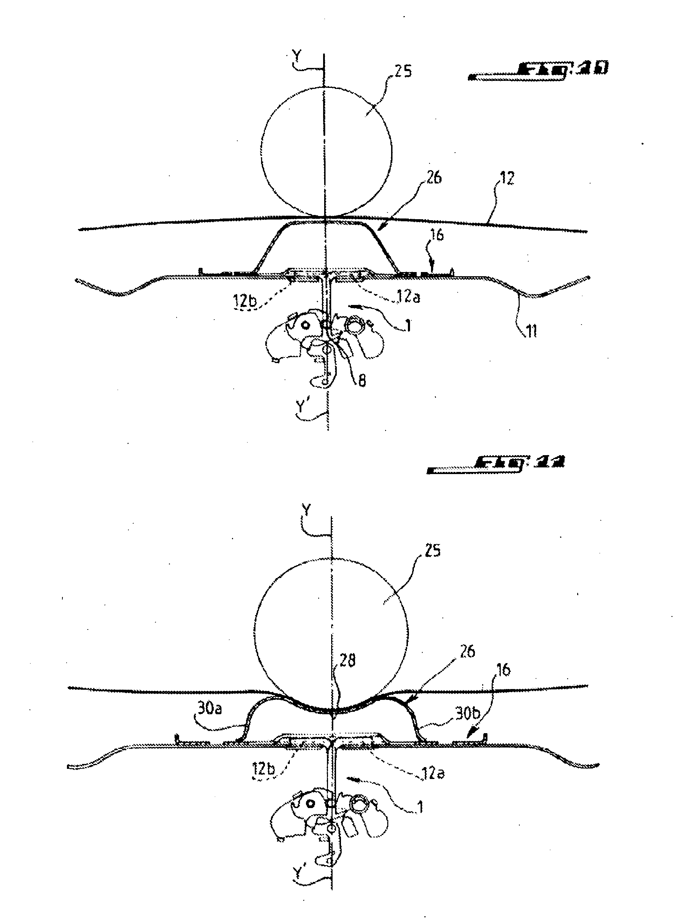

En référence aux figures 10 et 11, lors d'un choc piéton avant, la tête du piéton vient toujours dans un premier temps en contact avec la peau de capot puis, sous l'effet des efforts liés au choc, la peau de capot se déforme jusqu'à la lame 27 qui se déforme également essentiellement en présentant au niveau de son âme 28 originellement plane une convexité orientée vers le système de verrouillage tout en maintenant la tête du piéton 22 et la peau de capot 12 sur la lame 27 à une certaine distance du système de verrouillage 1 et en particulier du renfort de gâche 16 et de la gâche 7 disposées juste en dessous.

Ainsi, le dispositif de sécurité de l'invention permet d'absorber tout ou partie des efforts liés au choc et surtout permet d'éviter tout contact entre la tête ou tout autre partie du corps d'un piéton lors d'un choc avant avec le système de verrouillage 1 du capot du véhicule.

Bien entendu, l'invention trouve également application lors d'un choc avant avec un motocycliste pour lequel, si la tête est protégé par casque, certaines parties du corps peuvent heurter le capot avant du véhicule comme décrit précédemment en référence aux figures 4,5 et 10,11.

## Revendications

1. Dispositif de sécurité passif en cas de choc piéton dirigé vers le système de verrouillage en position fermée (1) du capot (2) d'un véhicule automobile (4), lequel véhicule (4) comprend une structure fixe (3) à laquelle le capot (2) est monté articulé, lequel capot (2) comprend une peau de capot (12) sous laquelle est disposé le système de verrouillage (1) pourvue d'un pêne (6) solidaire de la structure fixe (3) du véhicule (4) et d'une gâche (5) rigidement liée au capot (2) et sélectivement engagée dans le pêne (6), et lequel dispositif comprend un absorbeur de choc (26) rigidement lié au capot (2) en étant disposé entre la peau de capot (12) et le système de verrouillage (1), et dont une partie continue déformable (28) fait face au système de verrouillage (1) en étant disposé à une certaine distance de ce dernier de façon à amortir les efforts liés au choc et à éviter tout contact entre la peau de capot (12), susceptible d'être déformée sous l'impact du choc, et le système de verrouillage (1), **caractérisé en ce que** l'absorbeur (26) présente la forme générale d'une lame approximativement en U inversé (27) avec une première (30a) et une deuxième (30b) branches latérales s'étendant obliquement depuis la partie continue déformable (28) et dont les extrémités libres (32a,32b) sont rigidement liées à une doublure de capot (11) solidaire de la peau de capot (12) sous laquelle est disposé le système de verrouillage (1) et **en ce que** la lame (27) de l'absorbeur (26) est pourvue de nervures internes de raidissement (34) destinées à éviter des déformations incontrôlées de la lame (27), lesdites nervures (34) étant disposées longitudinalement par rapport au grand axe de la lame (27).

2. Dispositif de sécurité selon la revendication 1, **caractérisé en ce que** l'âme (28) de la lame (27) disposée entre la peau de capot (12) et la doublure de capot (11) en regard du système de verrouillage est essentiellement plate.

3. Dispositif de sécurité selon la revendication 1 ou 2, **caractérisé en ce que** la gâche (5) présente la forme générale d'un fil rigide en U (7) essentiellement disposé sous la doublure de capot (11) et dont les deux extrémités libres repliées (12a,12b) s'étendent dans des directions opposées par-dessus cette doublure (11).

4. Dispositif de sécurité selon la revendication 3, **caractérisé en ce qu'**il comprend un renfort de gâche (16) qui est rigidement fixé sur la doublure de capot (11) et qui comprend deux nervures creuses (22a,22b) dans lesquelles sont rigidement fixées chacune des extrémités recourbées (12a,12b) du fil de gâche (7).

5. Dispositif selon la revendication 4, **caractérisé en ce que** l'absorbeur de choc (26) est rigidement lié au renfort de gâche (16).

6. Dispositif selon l'une quelconque des revendications précédentes, **caractérisé en ce que** l'absorbeur de choc (26) est une lame pliée ou emboutie en acier ou en aluminium.

7. Dispositif selon l'une quelconque des revendications précédentes, **caractérisé en ce que** la partie continue déformable (28) de l'absorbeur de choc (26) faisant face au système de verrouillage (1) est à une distance de la peau de capot (12) permettant la dépose d'un cordon de mastic ou équivalent, par exemple à environ 2 mm de la peau de capot (12).

8. Dispositif selon l'une quelconque des revendications 5 à 7, **caractérisé en ce que** les extrémités libres de l'absorbeur (32a,32b) sont soudées ou viennent en prise sur le renfort de gâche (16), **en ce que** le renfort de gâche (16) est soudé ou vient en prise sur la doublure du capot (11) et **en ce que** les extrémités du fil de gâche (12a,12b) sont soudées au renfort de gâche (16) dans les nervures respectives (22a,22b) réalisées sur cet renfort (16).

9. Véhicule automobile comprenant le dispositif de sécurité selon l'une quelconque des revendications 1 à 8.

## Claims

1. Passive safety device in case of a collision with a pedestrian directed towards the locking system in the closed position (1) of the bonnet (2) of a motor vehicle (4), said vehicle (4) comprising a fixed structure (3) to which the bonnet (2) is fitted in an articulated manner, said bonnet (2) comprising a bonnet shell (12) under which is located the locking system (1) provided with a bolt (6) which is secured to the fixed structure (3) of the vehicle (4) and with a strike (5) which is rigidly connected to the bonnet (2) and selectively engaged with the bolt (6), and said device comprising a collision absorber (26) which is rigidly connected to the bonnet (2), while being located between the bonnet shell (12) and the locking system (1), and a deformable continuous portion (28) of which is opposite the locking system (1) while being located a certain distance from the latter so as to absorb the forces connected with the collision and to prevent any contact between the bonnet shell (12), which is liable to be deformed under the impact of the collision, and the locking system (1), **characterized in that** the absorber (26) has the general form of an approximately upside-down U-shaped plate (27) having a first (30a) and a second (30b) side branch which extend obliquely from the deformable continuous part (28) and the free ends (32a, 32b) of which are rigidly connected to a bonnet lining (11) secured to the bonnet shell (12) under which is located the locking system (1), and **in that** the plate (27) of the absorber (26) is provided with internal stiffening ribs (34) intended to prevent uncontrolled deformation of the plate (27), said ribs (34) being located longitudinally with respect to the major axis of the plate (27).

2. Safety device according to Claim 1, **characterized in that** the web (28) of the plate (27) located between the bonnet shell (12) and the bonnet lining (11) opposite the locking system is substantially flat.

3. Safety device according to Claim 1 or 2, **characterized in that** the strike (5) has the general form of a rigid U-shaped wire (7) which is located substantially under the bonnet lining (11) and the two folded-back free ends (12a, 12b) of which extend in opposite directions above this lining (11).

4. Safety device according to Claim 3, **characterized in that** it comprises a strike reinforcing member (16) which is fixed rigidly to the bonnet lining (11) and which comprises two hollow ribs (22a, 22b) in which each of the curved ends (12a, 12b) of the strike wire (7) are rigidly fixed.

5. Device according to Claim 4, **characterized in that** the collision absorber (26) is rigidly connected to the strike reinforcing member (16).

6. Device according to any one of the preceding claims, **characterized in that** the collision absorber (26) is a folded or stamped steel or aluminium plate.

7. Device according to any one of the preceding claims, **characterized in that** the deformable continuous part (28) of the collision absorber (26) opposite the locking system (1) is at a distance from the bonnet shell (12) such that a bead of mastic or the like can be deposited, for example around 2 mm from the bonnet shell (12).

8. Device according to any one of Claims 5 to 7, **characterized in that** the free ends (32a, 32b) of the absorber are welded to or engage with the strike reinforcing member (16), **in that** the strike reinforcing member (16) is welded to or engages with the bonnet lining (11) and **in that** the ends of the strike wire (12a, 12b) are welded to the strike reinforcing member (16) in the respective ribs (22a, 22b) produced on this reinforcing member (16).

9. Motor vehicle comprising the safety device according to any one of Claims 1 to 8.

## Patentansprüche

1. Passive Sicherheitsvorrichtung für den Fall eines Fußgängeraufpralls, der zu einem System (1) für die Verriegelung in der geschlossenen Position der Haube (2) eines Kraftfahrzeugs (4) geleitet wird, wobei das Fahrzeug (4) eine feste Struktur (3) aufweist, an der die Haube (2) schwenkbar montiert ist, wobei die Haube (2) eine Haubenhaut (12) aufweist, unter der das Verriegelungssystem (1) angeordnet ist, das versehen ist mit einem mit der festen Struktur (3) des Fahrzeugs (4) fest verbundenen Riegel (6) und mit einem mit der Haube (2) starr verbundenen Schließhaken (5), der mit dem Riegel (6) wahlweise in Eingriff ist, und wobei die Vorrichtung einen Stoßabsorbierer (26) aufweist, der mit der Haube (2) starr verbunden ist und sich zwischen der Haubenhaut (12) und dem Verriegelungssystem (1) befindet und dessen verformbarer ununterbrochener Teil (28) dem Verriegelungssystem (1) zugewandt ist, wobei er in einem bestimmten Abstand von diesem Letzteren angeordnet ist, derart, dass er die mit dem Aufprall einhergehenden Kräfte dämpft und jeglichen Kontakt zwischen der Haubenhaut (12) vermeidet und unter der Einwirkung des Stoßes verformt werden kann, wobei das Verriegelungssystem (1) **dadurch gekennzeichnet ist, dass** der Absorbierer (26) die allgemeine Form eines Blattes mit der angenäherten Form eines umgedrehten U (27) aufweist, wovon sich ein erster seitlicher Schenkel (30a) und ein zweiter seitlicher Schenkel (30b) von dem verformbaren ununterbrochenen Teil (28) schräg erstrecken und wovon die freien Enden (32a, 32b) mit einer Aufdoppelung (11) der Haube, die mit der Haubenhaut (12), unter der das Verriegelungssystem (1) angeordnet ist, fest verbunden ist, starr verbunden sind, und dass das Blatt (27) des Absorbierers (26) mit inneren Versteifungsrippen (34) versehen ist, die dazu vorgesehen sind, unkontrollierte Verformungen des Blattes (27) zu vermeiden, wobei die Rippen (34) in Bezug auf die große Achse des Blattes (27) longitudinal angeordnet sind.

2. Sicherheitsvorrichtung nach Anspruch 1, **dadurch gekennzeichnet, dass** der Kern (28) des Blattes (27), der zwischen der Haubenhaut (12) und der Haubenaufdoppelung (11) gegenüber dem Verriegelungssystem angeordnet ist, im Wesentlichen eben ist.

3. Sicherheitsvorrichtung nach Anspruch 1 oder 2, **dadurch gekennzeichnet, dass** der Schließhaken (5) die allgemeine Form eines starren U-förmigen Drahts (7) aufweist, der im Wesentlichen unter der Haubenaufdoppelung (11) angeordnet ist und dessen zwei umgebogene freie Enden (12a, 12b) sich in entgegengesetzten Richtungen über diese Aufdoppelung (11) erstrecken.

4. Sicherheitsvorrichtung nach Anspruch 3, **dadurch gekennzeichnet, dass** sie eine Schließhakenverstärkung (16) aufweist, die an der Haubenaufdoppelung (11) starr befestigt ist und zwei Hohlrippen (22a, 22b) aufweist, in denen jedes der umgebogenen Enden (12a, 12b) des Schließhakendrahts (7) starr befestigt sind.

5. Vorrichtung nach Anspruch 4, **dadurch gekennzeichnet, dass** der Stoßabsorber (26) mit der Schließhakenverstärkung (16) starr verbunden ist.

6. Vorrichtung nach einem der vorhergehenden Ansprüche, **dadurch gekennzeichnet, dass** der Stoßabsorber (26) ein gebogenes oder tief gezogenes Blatt aus Stahl oder Aluminium ist.

7. Vorrichtung nach einem der vorhergehenden Ansprüche, **dadurch gekennzeichnet, dass** der verformbare ununterbrochene Teil (28) des Stoßabsorbers (26), der dem Verriegelungssystem (1) zugewandt ist, sich in einem Abstand von der Haubenhaut (12) befindet, was die Aufbringung eines Streifens aus Spachtelmasse oder dergleichen beispielsweise etwa 2 mm von der Haubenhaut (12) ermöglicht.

8. Vorrichtung nach einem der Ansprüche 5 bis 7, **dadurch gekennzeichnet, dass** die freien Enden des Absorbierers (32a, 32b) an die Schließhakenverstärkung (26) geschweißt oder damit in Eingriff sind, dass die Schließhakenverstärkung (16) an die Haubenaufdoppelung (11) geschweißt oder damit in Eingriff ist und dass die Enden des Schließhakendrahts (12a, 12b) an die Schließhakenverstärkung (16) in den jeweiligen Rippen (22a, 22b), die in dieser Verstärkung (16) verwirklicht sind, geschweißt sind.

9. Kraftfahrzeug, das die Sicherheitsvorrichtung nach einem der Ansprüche 1 bis 8 enthält.
